# EUROPÄISCHE PATENTSCHRIFT

(11) **EP 0 950 033 B1**
(45) Veröffentlichungstag und Bekanntmachung des Hinweises auf die Patenterteilung: **05.12.2001**
(21) Anmeldenummer: 97937447.7
(22) Anmeldetag: 13.08.1997
(51) Int. Cl.: C04B 20/10, C04B 20/12

(54) **VERFAHREN ZUR HERSTELLUNG VON UMHÜLLTEN ZUSCHLAGSTOFFEN FÜR KONSTRUKTIONSBETON ZUR VERBESSERUNG DER FRISCH- UND/ODER FESTBETONEIGENSCHAFTEN**
PROCESS FOR PRODUCING COATED AGGREGATES FOR CONSTRUCTION CONCRETE AND THUS IMPROVING THE FRESH AND/OR SET CONCRETE PROPERTIES
PROCEDE POUR LA PRODUCTION D'AGREGATS ENROBES POUR BETON DE CONSTRUCTION DESTINES A AMELIORER DES PROPRIETES DU BETON FRAIS ET/OU DURCI

(30) Priorität: 14.08.1996 DE 19632711
(43) Veröffentlichungstag der Anmeldung: 20.10.1999
(73) Patentinhaber: UNIVERSITÄT KARLSRUHE, 76128 Karlsruhe (DE)
(72) Erfinder: GARRECHT, Harald, D-76297 Stutensee (DE); GÖTZ, Joachim, D-76479 Steinmauern (DE)
(74) Vertreter: Pietruk, Claus Peter, Dipl.-Phys.
(86) Internationale Anmeldenummer: DE9701720
(87) Internationale Veröffentlichungsnummer: WO9806677

(56) Entgegenhaltungen:
- CH-A- 386 664
- DE-A- 3 040 344
- DE-A- 4 330 929
- FR-A- 1 335 026
- US-A- 4 351 670
- DATABASE WPI Section Ch, Week 8327 Derwent Publications Ltd., London, GB; Class A18, AN 83-702679 XP002049571 & JP 58 089 704 A (FUJIMORI KOGYO KK)

## Beschreibung

Die vorliegende Erfindung betrifft ein Verfahren zur Verarbeitung eines Betons gemäß dem Oberbegriff des unabhängigen Anspruchs 1 sowie die Verwendung eines umhüllten, offenporigen Leichtzuschlagsstoffes. Damit befaßt sich die vorliegende Erfindung prinzipiell mit Konstruktionsbeton.

Konstruktionsbetone zeichnen sich durch hohe Festigkeiten und eine gute Dauerhaftigkeit aus. Als Betonzuschlag kommt dabei ein Gemenge aus gebrochenen oder ungebrochenen, gleich oder verschieden großen Körnern, natürlicher oder künstlicher Herkunft zum Einsatz, der in Sonderfällen auch aus Metall oder aus organischen Stoffen besteht. In den nationalen und internationalen Normen wird dabei zwischen Betonzuschlag mit dichtem Gefüge und Betonzuschlag mit porigem Gefüge unterschieden.

Am häufigsten wird im konstruktiven Ingenieurbau Betonzuschlag mit dichtem Gefüge verwendet, mit dem bei geeigneter Betonrezeptur hohe Festigkeiten und eine günstige Dauerhaftigkeit erreicht werden kann. Voraussetzung ist aber, daß der Frischbeton ein gutes Zusammenhaltevermögen besitzt und so verarbeitbar ist, daß er ohne wesentliche Entmischungen gefördert, an der Einbaustelle auch bei dichter Bewehrungsanordnung eingebracht und praktisch vollständig verdichtet werden kann. Die Verarbeitbarkeit des Frischbetons hängt dabei von der Betonzusammensetzung, insbesondere vom Wassergehalt des Betons, von evtl. verwendeten Zusatzmitteln, von Feinheit und Menge der Feinstoffe sowie von Art und Kornzusammensetzung des Betonzuschlags. Das Verhalten des erhärteten Konstruktionsbetons wird von den Eigenschaften des Betonzuschlags und des hydratisierten Zementsteins geprägt. Für die mechanischen Eigenschaften des Betons bezeichnend ist, daß schon der unbelastete Normalbeton in der Kontaktzone zwischen Zementstein und Zuschlag Mikrorisse aufweist. Die Bildung der Mikrorisse kann auf die Behinderung der Schwindverformung des Zementsteins durch die volumenstabilen Zuschläge aus dichtem Gefüge zurückgeführt werden. Wegen der geringen Verbundfestigkeit beginnen bei einer Belastung des Betons in Höhe von etwa 40 % der Druckfestigkeit die bereits vorhanden Rissen zu wachsen. Die Betonfestigkeit wird bei weiterer Laststeigerung erreicht, sobald die Mikrorisse eine kritische Länge annehmen. Folglich ist für die Festigkeit und das Bruchverhalten der Betone die Verbundfestigkeit zwischen Zuschlag und Zementstein mitverantwortlich.

Neben Zuschlag aus dichtem Gefüge findet im Betonbau auch Zuschlag mit porigem Gefüge Verwendung, der meist eine deutlich geringere Kornrohdichte hat und in erster Linie zur Herstellung von Konstruktionsleichtbetonen eingesetzt wird. Gefügedichte Konstruktionsleichtbetone zeichnen sich durch technisch vorteilhaft nutzbare Eigenschaften (hohe Wärmedämmwirkung, geringe Rohdichte und günstiges Verhältnis von Druckfestigkeit zu Rohdichte) aus, die diesem Baustoff zahlreiche Einsatzmöglichkeiten im konstruktiven Ingenieurbau bieten. Seit wenigen Jahren wird darüber hinaus angestrebt, hochfeste Leichtbetone im Ingenieurbau zu verwenden, da durch die im Vergleich zu Normalbetonen geringeren Konstruktionsgewichte in Verbindung mit hohen Festigkeiten eine erhebliche Einsparung an Spann- und Bewehrungsstählen möglich wird. Zudem kann der Aufwand im Schalungsbau deutlich reduziert werden. Auch der geringe Aufwand bei der Gründung von Bauwerken aus Leichtbeton als Folge der Reduzierung des Konstruktionsgewichtes kann zu erheblichen Kosteneinsparungen führen.

Neben den höheren Kosten für die Leichtzuschlagstoffe, die jedoch aufgrund des verminderten Eigengewichts der Konstruktionsleichtbetone durch Einsparungen an erforderlichem Bewehrungsstahl, bei den erforderlichen Gründungsmaßnahmen und beim Transport daraus hergestellter Bauteile ausgeglichen werden können, sind vor allem die erheblichen Schwierigkeiten beim Verarbeiten des Frischbetons zu nennen, die die Verwendung gefügedichter Leichtbetone im konstruktiven Ingenieurbau begrenzen. Bedingt durch das Wasseraufnahmevermögen der offenporigen Leichtzuschläge tritt während des Mischens, Förderns und Einbaus der Leichtbetone eine Veränderung der Frischbetonkonsistenz auf. Der Entzug von Teilen des Anmachwassers ist beim Fördern mit Betonpumpen besonders signifikant, da neben den Kapillarkräften auch der Pumpendruck einen Großteil des Anmachwassers in die Poren der Leichtzuschläge einpreßt.

Zur Vermeidung der Konsistenzänderung werden die Leichtzuschläge im Zuge der Herstellung des Frischbetons meist vorgenäßt. Damit soll dem Bestreben der Zuschläge, Anmachwasser in ihr Porengefüge aufzunehmen, begegnet werden. Allerdings läßt sich bei dieser Vorgehensweise der Wasserzementwert nicht mehr exakt definieren, wie es aber gerade im Hinblick auf möglichst hohe Festigkeiten der Konstruktionsleichtbetone erforderlich wäre. Kann der vorgenäßte Leichtbeton auf der Baustelle im Krankübel zumeist noch in befriedigender Weise zum Einbauort gefördert werden, so ist ein Pumpen des Frischbetons bislang nicht möglich. Aufgrund der während des Pumpens auftretenden Förderdrücke (bis 50 bar, bei größerer Förderweite und -höhen u.U. sogar deutlich höhere Drücke) wird während der Verweilzeit des Frischbetons in der Pumpleitung (ca. 1 Minute) das Anmachwasser des Frischbetons nahezu vollständig in die offenporigen Leichtzuschläge eingepreßt. Verstopfungen im Pumpleitungssystem und Entmischungen des Frischbetons sind die Folge.

Ähnlich problematisch erweist sich die Verwendung von gebrochenen Zuschlägen aus dem Rückbau von Bauwerken. Hier fallen große Mengen an mineralischem Bauschutt an, der bislang zum größten Teil deponiert wird und nur in geringem Umfang bei untergeordneten Bauaufgaben wieder Verwendung findet. Eine Wiederverwertung von gebrochenen Zuschlägen aus Abbruchmaterial für die Herstellung von Konstruktionsbeton ist bislang auf Einzelfälle beschränkt, da die gebrochenen Zuschlagsmaterialien eine zumindest teilweise offenporige Struktur aufweisen, die gleich den Leichtzuschlagstoffen dem Frischbeton Teile des Anmachwassers entziehen. Das Wasseraufnahmebestreben der Abbruchmaterialien wirkt sich somit analog den Leichtzuschlägen ungünstig auf die Frisch- und Festbetoneigenschaften aus.

Bereits in den Merkblättern zur Herstellung und Verarbeitung von Leichtbetonen im Jahr 1974 (Merkblatt II und III für Leichtbeton und Stahlleichtbeton mit geschlossenem Gefüge. In: Beton 24 H. 7, S. 268-269 und H. 8, S. 297-302, 1974) wurde auf die Probleme der Pumpförderung von Leichtbetonen hingewiesen. Im Hinblick auf die zeitlichen, räumlichen und wirtschaftlichen Vorteile dieser Technik wurden seither verschiedenste Versuche unternommen, um diese Probleme zu beseitigen (Zusammenfassende Darstellung des Standes der Technik bis zum Jahr 1975 von B. Schulz: Erfahrungen beim Pumpen von Leichtbeton. In: Beton 25 H. 3, S. 86/91, 1975).

So wurde u.a. die Kornoberfläche von Blähtonzuschlägen durch Überbrennen mit einer glasigen, wasserundurchlässigen Schicht versehen. Verfahrenstechnisch ist dieser Vorgang jedoch kaum zu kontrollieren und führt zudem zu starken Verklebungen der Zuschläge untereinander. Die Beschichtung mit Kunststoffdispersionen erwies sich ebenfalls als wenig brauchbar, da einerseits der schlechte Verbund und andererseits die Beschädigung und das Abfallen der Umhüllungen während des Umschlagens der Zuschläge zu kontrollierbaren Anreicherungen von Kunststoffhüllen im Konstruktionsleichtbeton führen. Auch die Imprägnierung bzw. Hydrophobierung der Leichtzuschläge konnte der hohen Feuchteaufnahme des Leichtbetons während des Einwirkens des Pumpförderdrucks nicht entgegenwirken. Alleine eine Wasser-Vorsättigung der Leichtzuschläge führt zu geringeren Entmischungen des Frischbetons. Doch werden durch die Wasseraufnahme der Leichtzuschläge deutlich höhere Rohdichten des Frischbetons und zunächst des Festbetons erreicht. Neben dem Verlust der günstigen Wärmedämmwirkung muß folglich mit deutlich höheren Bauteilgewichten gerechnet werden. Selbst in den vom Verband der Leichtzuschlagstoffherstellern veröffentlichten Informationen zum Herstellen und Verarbeiten von gefügedichten Leichtbetonen im konstruktiven Ingenieurbau finden sich bislang keine Hinweise zur Verbesserung der Pumpförderung (z.B. Übersichtsbeitrag H. Schnabel; J. Spitzner: Gefügedichter Leichtbeton und Stahlleichtbeton. In: Betonfertigteiltechnik 1992. S. Smeplass; A. Hammer; M. Sandvik: Production of Structural High Strength LWAC with Initially Dry Aggregates. In: Tagungsband des Leichtbetonsymposiums in Sandefjord, Norwegen, 1995.)

Alle bisher bekannten Maßnahmen führen also entweder nicht zu der gewünschten Verbesserung des Feuchteverhaltens der Zuschläge und/oder sie sind verfahrenstechnisch nur schwer realisierbar und/oder sie sind unwirtschaftlich, d.h. sie würden zu gesteigerten Herstellungskosten führen, deren Höhe durch die erzielten technischen Vorzüge wirtschaftlich nicht kompensiert werden kann.

Dies gilt auch in Verbindung mit den aus der Patentliteratur bekannten Leichtbetonzuschlagstoffen bzw. beschichteten Zuschlägen.

Aus der DD-PS 208 142 ist ein Verfahren zur Herstellung von Leichtbetonbauelemente bekannt, gemäß dem unter Verwendung der Aufbauagglomeration Granalien aus Braunkohlenasche, Wasser und gegebenenfalls Zement hergestellt werden. Die Umhüllung der Granalien erfolgt mittels Zement - allerdings durch Pudern und es dürfte ohne weiteres einsichtig sein, daß auf diese Weise keine dünne, kompakte und dichte Schicht also keine sinnvolle Umhüllung der Zuschläge zur Verwendung in Konstruktionsbetonen hergestellt werden kann.

In der DE 26 23 378 A1 ist ein Verfahren zur Vorbehandlung eines Beton-/Leichtbeton-Zuschlagstoffs offenbart, gemäß der eine Umhüllung von Zuschlägen mit einer zementgebundenen Schicht unter Vorgabe von Additiven verifiziert wird. Das Verfahren ist durch folgende Merkmale charakterisiert: Es basiert auf einem gewöhnlichen Freifallmischer, mit dem von vornherein keine kompakte dichte Umhüllung realisiert werden kann. Ferner ist ein hoher Wasserzementwert erforderlich, um eine gute Homogenisierung des Gemisches zu ermöglichen, womit dann jedoch eine relativ geringe Verbundfestigkeit und eine geringe Festigkeit und Dichtigkeit der Umhüllung verbunden ist. Ganz generell gilt, daß im Freifallmischer geeignete Umhüllungen hinsichtlich Schichtdicke, Zusammensetzung und Dichtheit ohne weitere technologische Fortentwicklung und den Einbau von zusätzlichen Prallblechen etc. nicht mit den erforderlichen Eigenschaften realisiert werden können.

Die FR 2 664 262 A1 offenbart die Herstellung eines Leichtzuschlagstoffs aus hölzernen Ausgangsstoffen unterschiedlicher Größe (zum Beispiel Sägemehl, Sägespäne und Rindenstücken). Dabei werden die zuvor konservierten hölzernen Bestandteile in einem Mischer in eine dünnflüssige Schlämme eingegeben. Die in dem Anmachwasser dispergierten Zementpartikel lagern sich an den Holzoberflächen an und verkleben nach der Hydratation der Zementpartikel die kleineren Teilchen mit den Holzspänen und Rindenstücken, so daß ein niederfester Leichtzuschlagstoff entsteht.

Die Druckschrift US 4 351 670 beschreibt ein Verfahren zur Herstellung von praktisch nicht schrumpfendem Leichtbeton, wobei ein poriger gebrochener Zuschlagstoff vorgenäßt und anschließend mit Zementpulver in einem Trommel beschichtet wird. Das dabei entstehende Zementcoating härtet mit Wasser und ergibt eine dünne und harte Haut hoher Festigkeit. Dieses Beton wird bei seiner Anwendung gegossen oder gekippt nicht gepumpt.

Aufgabe der vorliegenden Erfindung ist es, ein Betonverarbeitungsverfahren anzugeben, welches die Kosten im Bau mit Konstruktionsbeton verringert.

Die Lösung dieser Aufgabe wird durch die Merkmale der Patentansprüche charakterisiert.

Es wird also ein Verfahren zur Verarbeitung eines Betons, der einen offenporigen Leichtzuschlagsstoff enthält, auf welchen eine Umhüllung aus Zement mit eingestelltem Wasserzementwerk wird in einem Granulierteller bzw. einer Granuliertrommel durch Agglomeration vorgesehen wird, vorgeschlagen, bei welchem bei der Verarbeitung eine Druckbeaufschlagung mit Pumpdrücken erfolgt.

Die angegebene zementgebundene Umhüllung hemmt beziehungsweise verhindert zum einen das Eindringen des Anmachwassers in das Porengefüge von Leichtzuschlägen sowie von offenporigen Recyclingzuschlägen und fördert zum anderen den Verbund zwischen Kornoberfläche des Zuschlags und der umgebenen Feinmörtelmatrix. Damit geht der Vorteil einher, daß dem Frischbeton weder beim Mischen noch während des Transports zur Baustelle, weder beim Fördern und Pumpen auf der Baustelle noch beim Einbringen in die Schalung größere Mengen an Anmachwasser durch kapillares Saugen oder durch die Druckeinwirkung von den offenporigen Zuschläge entzogen werden. Damit kann eine Entmischung des Frischbetons unterbunden werden, und es wird eine Verarbeitbarkeit durch Druckbeaufschlagung mit Pumpdrücken erzielt, d.h. der Beton kann gepumpt werden.Die Frischbetoneigenschaften der mit umhüllten offenporigen Zuschlägen hergestellten Konstruktionsbetone entsprechen folglich denen von Frischbetonen aus Normalzuschlägen. Die für Konstruktionsbetone aus Normalzuschlägen bekannte Beziehung zwischen Wasserzementwert und Betonfestigkeit etc. kann somit weitgehend auch auf gefügedichte Leichtbetone als auch auf Betone aus Recyclingzuschlägen übertragen werden. Ebenso entfalten Betonzusatzmittel ihre Wirkung damit auch bei Betonen aus offenporigen Zuschlägen in der gleichen Weise wie dies von Normalbetonen bekannt ist. Anforderungen der Bauindustrie an einen baustellengerechten und pumpfähigen Frischbeton können durch die Verwendung von umhüllten offenporigen Zuschlagstoffen erfüllt werden. Durch die Umhüllung erhöht sich zudem die Festigkeit eines erhärteten Konstruktionsbeton aus offenporigen Zuschlägen. Durch Vorgabe eines gezielt einstellbaren Wasserzementwertes können folglich selbst mit umhüllten Leichtzuschlagstoffen hochfeste Konstruktionsleichtbetone hergestellt werden.

Konstruktionsbetone aus Zuschlag mit porigem Gefüge können somit problemlos für die Erstellung aller Ingenieurbauwerke, beispielsweise von Hochhäusern, Hallen, Brücken, Off-Shore-Konstruktionen, Verwendung finden, da die abdichtende zementgebundene Umhüllung einerseits eine wirtschaftliche Förderung des Frischbetons ohne Beeinträchtigung der Frischbetoneigenschaften ermöglicht und andererseits die Einhaltung einer definierten Rohdichte im frischen und erhärteten Zustand und gezielte Festigkeiten sicherstellt, die gerade für die Planung und statische Bemessung von Ingenieurbauten bekannt und vorhersagbar sein sollten.

Mit der angegebenen Umhüllung von Zuschlagstoffen können aber trotz Pumpbarkeit noch zahlreiche andere Betoneigenschaften verbessert werden.

So kann durch das geringe Wasseraufnahmevermögen von umhüllten offenporigen Zuschlagstoffen das Brandverhalten des Betons deutlich gegenüber einem gleichartigen Beton aus unumhüllte Zuschläge verbessert werden. Das von den unumhüllten offenporigen Zuschlägen während des Mischens bis hin zum Ansteifen des Frischbetons aufgesogene Anmachwasser kann nach der Erhärtung der Zementmörtelmatrix aufgrund der dichten Matrix nur langsam wieder an die Umgebung abgeführt werden. Im Brandfall führt das in den offenporigen Zuschlägen befindliche Wasser zu hohen Dampfdrücken, die Absprengungen und Abplatzungen in den äußeren Bauteilschichten bewirken. Da mit der erfindungsgemäßen Umhüllung dem Wasseraufnahmebestreben des Zuschlags entgegengetreten wird, kann der Brandschutz des Konstruktionsbetons deutlich verbessert werden.

Die Umhüllung der Zuschläge bewirkt aber nicht nur eine Abdichtung der Kornoberfläche, sondern kann auch den Verbund zwischen Zuschlag und Zementmörtelmatrix deutlich verbessern. So ist aus wissenschaftlichen Mikrostrukturuntersuchungen bekannt, daß die Kontaktzone zwischen Normalzuschlag und Zementstein aus einem mehrschichtigen System besteht. Direkt an der Zuschlagoberfläche haftet eine dichte, 2-3 µm dicke Kontaktschicht aus Calciumhydroxid. Darüber schließt eine dichte, 5-10 µm dicke Zwischenschicht an, die durch ein hohlraumreiches Gefüge gekennzeichnet ist. Neben tafelförmigen Calciumhydroxidkristallen und nadeligen Ettringitkristallen finden sich hier auch Calciumsilicathydrat. Die großen Calciumhydroxidkristalle sind mit der Kontaktzone verwachsen. Die Zwischenschicht weist in den darüber befindlichen Bereichen, im sogenannten Übergangsbereich mit einer Dicke von 5-10 µm, eine Strukturverdichtung aus Calciumsilicathydrat und Calciumhydroxid auf. Hier wird die Struktur der Zwischenschicht immer mehr der Struktur des Zementsteins ähnlicher.

Entsprechend der Mikrostruktur des Verbundbereichs von Zuschlag und Betonmatrix liegt die größte Schwachstelle des Systems im Bereich der Kontaktzone, in der sich infolge des Schwindbestrebens des Zementsteins dann auch während der Erhärtung Mikrorisse bilden, die Auslöser für ein weiteres Rißwachstum bei einer Belastung des Betons sind und damit die Festigkeit und das Bruchverhalten des Betons bestimmen. Mit der erfindungsgemäßen Umhüllung von Zuschlägen kann die Ausbildung der Kontaktzone des Zuschlags jedoch erheblich beeinflußt werden. So konnten bereits Hilsdorf und Ziegeldorf (Einfluß der Zuschlagkontaktzonen auf die mechanischen Eigenschaften von Beton, Institut für Massivbau und Baustofftechnologie, Universität Karlsruhe, 1978) feststellen, daß bei einem mit Kunststoffdispersion modifiziertem Zementstein eine Steigerung der Kontaktzonenenfestigkeit erreicht werden kann, die auch zu einer Festigkeitssteigerung des Betons führt. Mit dem erfindungsgemäßen Verfahren zur Umhüllung von Zuschlägen mit dichtem und porigem Gefüge können alle möglichen Zusätze, die sich günstig auf die Kontaktzonenfestigkeit auswirken, eingesetzt werden, wobei die Verbesserung gezielt auf die direkte Kornoberfläche des Zuschlags beschränkt werden kann und damit einen guten Verbund zwischen Zuschlag und Umhüllung sicherstellt. Durch Zugabe von geeigneten Kunststoffdispersionen kann folglich auch die Kontaktzone des Verbundbereichs zwischen Kornoberfläche und Umhüllung gezielt optimiert werden. Ein optimaler Verbund zwischen Umhüllung und Zementmörtelmatrix wird durch das hohe Nacherhärtungspotential der zementgebundenen Umhüllung beim Kontakt mit dem Anmachwasser des Frischbetons erreicht.

Das erfindungsgemäße Verfahren ist nicht nur auf die Beschichtung bzw. Umhüllung von zementgebundenen Substanzen beschränkt. Es ist auch möglich, andere Materialien, insbesondere Metalle, Farbpigmente etc. aufzubringen, die erlauben einen Beton mit besonderen Eigenschaften herzustellen, der weitere Einsatzmöglichkeiten von Zuschlägen aus dichtem oder porigem Gefüge erlaubt. Beispielsweise kann durch Einsatz von wärmeleitfähigen Zusatzstoffen bei der Umhüllung des Leichtzuschlags ein Leichtbeton mit guter Wärmeleitfähigkeit geschaffen werden, der insbesondere als Estrich bei Fußbodenheizungen große Vorteile bieten würde. Durch die Zugabe elektrisch leitfähiger Zusatzstoffe bei der Umhüllung von Zuschlägen aus dichtem und porigem Gefüge kann zudem ein elektrostatisch geeigneter Fußbodenestrich, beispielsweise für die elektrotechnische und chemische Industrie, hergestellt werden. Generell können all jene Zusatzstoffe in der Umhüllung eingebunden werden, mit denen die Eigenschaften eines Betons günstig beeinflußt werden können.

Zur Umhüllung der Betonzuschläge werden Ausgangsstoffe eingesetzt, eine Mischung aus Zementen, Betonzusatzmittel und/oder Betonzusatzstoffe die identisch und damit völlig verträglich mit den bei der Herstellung von Betonen verwendeten Materialien der Betonmatrix sind. Die Folge davon ist ein verbessertes Verbundverhalten zwischen Zuschlagkorn und Mörtelmatrix des Betons, so daß ein günstigeres Festigkeits- und Bruchverhalten der aus umhüllten Zuschlägen hergestellten Betone erreicht werden kann.

Ein weiterer Vorteil besteht darin, daß beim Umhüllungsvorgang eine geringere Wassermenge eingesetzt wird, als für die vollständige Hydratation des für die Umhüllung eingesetzten Zementes benötigt wird. Daher verfügt die Umhüllung über ein Nacherhärtungspotential, das einen optimalen Verbund zwischen umhülltem Leichtzuschlag und Zementmörtelmatrix des Betons sicherstellt. Zudem kann auch der Verbund in der Kontaktzone der Kornoberfläche des Zuschlags und der zementgebundenen Umhüllungsschicht durch Zugabe geeigneter Stoffe beim Umhüllungsvorgang erheblich gegenüber dem normalen Verbund von Zuschlag und Zementmörtel verbessert werden. Bisherige Untersuchungen an Leichtbetonen führten bereits zu einer Steigerung der Druckfestigkeit um mehr als 30 % gegenüber einem Leichtbeton der gleichen Mischungszusammensetzung, aber mit unumhüllten Zuschlagkörnern. Auch bei Betonen aus Zuschlägen mit dichtem Gefüge können Festigkeitssteigerungen durch eine Verbesserung der Verbundzone zwischen Kornoberfläche und Zementmörtelmatrix erreicht werden. Zudem stellt sich die an der Kornoberfläche im Beton zu beobachtende Mikrorißbildung entlang der Korngrenzen in deutlich geringerem Ausmaße ein, wenn ein umhüllter Zuschlag unter Einsatz von Kunststoffdispersionen verwendet wird, daß zu einem günstigeren Festigkeitsverhalten des Konstruktionsbetons führt.

Die Umhüllung bzw. Beschichtung besteht vorzugsweise aus Zementen und Betonzusatzmitteln und/oder Betonzusatzstoffen.

Der Kern der Erfindung ist letztlich darin zu sehen, daß die Ausgangsstoffe der Beschichtung nur mit geeigneten Verfahrenstechniken in einer minimalen Schichtdicke, gleichmäßig und kompakt auf dem Zuschlag aufgebaut werden können, um eine ausreichend abdichtende Wirkung und einen verbesserten Verbund zwischen Zuschlag und Mörtelmatrix des Betons zu erreichen. Als geeignete und wirtschaftliche Verfahrenstechnik zur Umhüllung steht die Aufbauagglomeration mit dem Granulierteller bzw. der Granuliertrommel, ggf. noch das Granulierwirbelbett-Verfahren, zur Verfügung, bei denen die Zuschläge zunächst vorgenäßt werden und anschließend die Beschichtung mittels gleichmäßiger Zugabe des Zements bei gleichzeitigem Aufsprühen von Wasser erfolgt. Mit einer Fortentwicklung des Granulierwirbelbett-Verfahrens läßt sich auch diese Technologie wirtschaftlich für eine gleichmäßig dichte und dünnschichtige Umhüllung von Zuschlägen einsetzen. Andere Verfahren, so der Einsatz der Preßagglomeration, der Microverkapselung und der Mischagglomeration im Freifallmischer oder mit dem Schneckenmischer, können entsprechend dem derzeitigen Stand der Technik nicht in geeigneter und wirtschaftlicher Weise eingesetzt werden, um die Umhüllung der Zuschläge kontrolliert aufzubauen. Gerade bei den beiden zuletzt genannten Verfahren müssen entweder die Zuschlagstoffe intensiv vorgenäßt werden, um anschließend die zugegebenen feindispersen Ausgangsstoffe im Mischer auf den Zuschlag aufzubringen. Erfolgt die Zugabe des Zements in Form einer Schlämme, bleiben die für die Umhüllung eingesetzten Stoffe nur ungleichmäßig und nicht kompakt auf der Kornoberfläche haften. Die Anforderungen an eine für Pumpbarkeit hinreichend dichte Umhüllung werden somit nicht erfüllt.

Da zum gegenwärtigen Zeitpunkt mit der Aufbauagglomeration mit einem Granulierteller oder einer Granuliertrommel die erfindungsgemäße Umhüllung in technisch einfacher und beherrschbarer Form wirtschaftlich auf die Kornoberfläche aufgebracht werden kann, werden nachfolgend die verfahrenstechnischen Schritte zur Beschichtung der Zuschläge aus dichtem und porigem Gefüge anhand dieser Technologie aufgezeigt:

Zunächst werden die chargenweise oder kontinuierlich in den Granulierteller bzw. in die Granuliertrommel eingebrachten Zuschläge auf der geneigten Tellerfläche einer ständigen Rollbewegung ausgesetzt. Während dieser Rollbewegung werden die feindispersen Feststoffe, d.h. der Zement, die Betonzusatzmittel, die Betonzusatzstoffe und ggf. andere Hilfsstoffe unter gleichzeitigem Besprühen mit einer Bindemittelflüssigkeit, vorzugsweise Wasser, gleichmäßig dünn beschichtet bzw. umhüllt. Durch die gleichmäßige Zementzugabe bei weiterer Flüssigkeitszugabe wird die Bildung von Konglomeraten aus umhüllten Zuschlagskörnern vermieden. Günstige Umhüllungen können bei einer Zuführung von Wasser und Zement im Massenverhältnis von Wasser zu Zement von etwa 1:4 erreicht werden. Das optimale Verhältnis wird von der Art des verwendeten Zementes und den Betonzusatzmitteln bzw. Betonzusatzstoffen bestimmt.

Je nach angestrebter Verbesserung der Betoneigenschaft im frischen oder festen Zustand können verschiedenste Betonzusatzmittel und Betonzusatzstoffe sowie weitere Hilfsstoffe einzeln oder in Kombination zugegeben werden, wobei in Vorversuchen die optimalen Komponenten und Zugabemengen zu erarbeiten sind.

Als Betonzusatzmittel stehen dabei vor allem Betonverflüssiger, Fließmittel, Stabilisierer, Betondichtungsmittel, Erstarrungsbeschleuniger und ggf. Luftporenbildner zur Verfügung. Die Betonzusatzmittel werden nur in relativ geringen Mengen zugesetzt. Zumeist müssen sie dem Wasser untergemischt werden, um gleichmäßig auf den Kornoberflächen verteilt werden zu können. Bei den physikalisch wirkenden Betonzusatzmittel handelt es sich zumeist um oberflächenaktive Stoffe, die neben einer verfüssigenden Wirkung durch die Herabsetzung der Oberflächenspannung des Wassers auch eine Schaum- oder Luftporenbildung auslösen können. Als oberflächenaktive Stoffe kommen dabei neben anionaktiven auch kationaktive Stoffe zum Einsatz. Desweiteren werden nichtiogene Stoffe verwendet. Die Einflüsse der einzelnen Betonzusatzmittel auf den Beschichtungsvorgang und die Eigenschaften der umhüllten Zuschläge sowie des daraus hergestellten Betons sind in Vorversuchen zu untersuchen.

Betonzusatzstoffe sind fein verteilte Stoffe, die durch chemische oder physikalische Wirkung bestimmte Betoneigenschaften, z.B. Konsistenz, Verarbeitbarkeit, Festigkeit, Dichtheit oder Farbe der Umhüllung beeinflussen. Inerte Stoffe, beispielsweise Gesteinsmehle aus Quarz oder Kalkstein, könnten eingesetzt werden, um den Anteil an Zement in der Umhüllung und damit die Kosten zu reduzieren. Pigmente können zum Einfärben der Zuschläge verwandt werden. Puzzolanische Stoffe, die einen hohen Anteil an Kieselsäure und ggf. Tonerde aufweisen, können mit Wasser und Calciumhydroxid, das bei der Erhärtung des Zementes entsteht, reagieren. Diese Zusatzstoffe könnten folglich genutzt werden, um das Nacherhärtungspotential der Umhüllung zu steigern und die Art und Dauer der Nachbehandlung des umhüllten Zuschlags zu steuern. Gebräuchliche Puzzolane sind Steinkohleflugaschen, Silicastaub bzw. silicatische Feinstäube sowie getempertes Steinmehl. Neben den besonderen Einflüssen auf die Festigkeitsentwicklung der Umhüllungsschicht wirken sich Puzzolane als Folge ihres kleinen Partikeldurchmessers auch günstig hinsichtlich der Packungsdichte von Zement und Betonzusatzstoffen aus, da sich die kleineren Partikel in die Hohlräume der größeren Zementkörner einlagern. Da sie gegenüber den Zementen neben der wesentlich größeren Feinheit teils zudem eine kugelige Form besitzen, erhöht beispielsweise die Zugabe von silicatischen Feinstäuben die Klebwirkung der Beschichtung an der Kornoberfläche, die bei der Aufbauagglomeration nicht zwingend erforderlich ist, die sich aber gerade bei einer Umhüllung im Granulierwirbelbett-Verfahren vorteilhaft auswirken kann. Latent-hydraulische Stoffe, die ähnlich den puzzolanischen Stoffen in Verbindung eines Anregers, beispielsweise Calciumhydroxid, reagieren aber keine Reaktion mit dem Anreger selbst eingehen, beispielsweise Hüttensand oder Hochofenschlacke, könnten ebenfalls genutzt werden, um das Nacherhärtungspotential der Umhüllung zu steuern.

Weitere Hilfsstoffe sind Kunststoffdispersionen oder sonstige organische Stoffe, beispielsweise hochleistungsfähige Polymere oder Cellulose, die als Plastifizierungsmittel oder Stabilisierer wirkend, die Klebrigkeit oder Packungsdichte der Umhüllung beeinflussen können. Außerdem können diese Hilfsstoffe je nach Art und Zusammensetzung auch eine günstigere Festigkeitsentwicklung, eine Erhöhung des Verformungsvermögens oder eine Steigerung des Verschleißverhaltens der Beschichtung bewirken. Desweiteren können Kunststoffdispersionen auch für die Optimierung der Nachbehandlung Verwendung finden.

Kugelförmige Zuschläge, wie z.B. Naturkiese oder die im Konstruktionsleichtbeton zumeist eingesetzten Blähtonkörner lassen sich dabei besonders gut beschichten. Mit der Aufbaugglomeration im Granulierteller oder in der Granuliertrommel lassen sich aber auch gebrochene, kantige Zuschlagkörner mit einer absperrenden Schicht umhüllen. Allerdings ist dabei zu beachten, daß hierfür größere Zementmengen erforderlich sind und die Schichtdicke der Umhüllung gegenüber kugelförmigen Zuschlägen ungleichmäßiger wird, Für gebrochene Materialien wäre daher der Einsatz des Granulierwirbelbett-Verfahrens anzustreben, bei dem auch gebrochene Kornformen mit einer erfindungsgemäßen Umhüllung beschichtet werden können.

Nach der Erhärtung der Umhüllung durch die Reaktion des Zementes mit dem für die Beschichtung verwendeten Wasser steht dann ein Zuschlag zur Verfügung, der die zuvor angeführten Verbesserungen hinsichtlich der Verarbeitbarkeit des Frischbetons aber auch der Eigenschaften des erhärteten Betons sicherstellt.

Der Umhüllungsvorgang kann dabei sowohl zentral beim Zuschlaghersteller erfolgen, als auch erst unmittelbar vor der Betonherstellung. Wird die Umhüllung der Betonzuschläge beim Zuschlaghersteller vorgenommen, beispielsweise im Anschluß an das Naßbaggern und Klassieren von Kiesen, nach dem Brechen und Klassieren von natürlichen oder recycelten Ausgangsstoffen, nach dem Brennen von Blähtonen etc., muß der beschichtete Zuschlag ausreichend nachbehandelt werden, damit die Umhüllung eine für die Lagerung, das Umschlagen und den späteren Mischvorgang notwendige Festigkeit erreicht. Die Art und Dauer der Nachbehandlung muß sich dabei an der sich anschließenden Lagerung des umhüllten Zuschlags (Silo- oder Haldenlagerung) und an den Auflasten durch darüber liegende umhüllte Zuschlagsmassen orientieren, um im Falle einer noch nicht vollständig erhärteten Beschichtung eine Konglomeration der umhüllten Zuschläge zu vermeiden. Sollen die umhüllten Zuschläge im Freien gelagert werden, ist zu berücksichtigen, daß durch die Bewitterung die Eigenschaften der Umhüllung beeinflußt werden, da die Niederschläge eine weitere Reaktion des noch nicht vollständig hydratisierten Zementes auslösen. Die weitere Hydratation hat jedoch keine nachteiligen Folgen für den umhüllten Zuschlag selbst. Soll jedoch der Verbund zwischen umhülltem Zuschlag und Zementmörtelmatrix des Betons optimiert werden, so wäre allerdings eine Lagerung der Zuschläge im Silo oder einer überdachten Halle vorzuziehen, um das Nacherhärtungspotential des umhüllten Zuschlags vollständig nutzen zu können.

Alternativ kann die Umhüllung aber auch dezentral unmittelbar vor der Betonherstellung erfolgen. Hierzu müßten spezielle Zemente und Betonzusatzmittel eingesetzt werden, die den Reaktionsprozeß des Zementes in der Umhüllung beschleunigen, so daß bereits direkt oder kurz nach dem Verlassen des Granuliertellers, der Granuliertrommel bzw. der Granulierwirbelbettanlage die Umhüllung eine ausreichende Festigkeit aufweist, um beim den Mischen nicht beschädigt zu werden und um außerdem eine ausreichende abdichtende Wirkung aufzuweisen, die die geforderte Verarbeitbarkeit und Pumpfähigkeit des Frischbetons sicherstellt. Durch den Einsatz geeigneter Zemente und Betonzusatzmittel läßt sich die erfindungsgemäße Umhüllung unmittelbar vor der Betonherstellung unproblematisch herstellen. In Form einer anlagentechnischen Erweiterung des Betonmischwerkes stellt die werksseitige Umhüllung derzeit aber noch die unwirtschaftlichere Variante des Umhüllungsprozesses dar.

Sollten sich aber umhüllte Zuschläge auf dem Markt etablieren, beispielsweise umhüllte Leichtzuschläge für Konstruktionsleichtbetone, umhüllte Recyclingzuschläge für Konstruktionsbetone oder gar umhüllte Zuschläge aus dichtem Gefüge zur Steigerung der Festigkeit und zur Verbesserung der Dauerhaftigkeit durch eine Minimierung der Mikrorisse im Beton, stellt die direkte Vorschaltung des Umhüllungsprozesses vor die Betonherstellung eine interessante technologische Perspektive auch für die Transportbetonindustrie dar.

Im folgenden werden mehrere Beispiele gegeben:

Die Leichtzuschlagkörner werden auf die geneigte Tellerfläche des Granuliertellers gegeben (anstelle eines Granuliertellers kann ohne weiteres auch eine Granuliertrommel verwendet oder gar das Granulierwirbelbett-Verfahren angewandt werden) und zunächst leicht vorgenäßt, um ein Anhaften des Zements auf der Leichtzuschlagkornoberfläche zu bewirken. Nach ausreichender Vornässung erfolgt die Beschichtung der in Rollbewegung befindlichen Körner durch eine gleichmäßige Zugabe des Zementes unter gleichzeitigem Aufsprühen von Wasser. Die Wasserbedüsung sollte dabei vorzugsweise in den Bewegungsbahnen der kleineren Zuschlagkörner erfolgen. Die gesamte während des Beschichtungsprozesses zugeführte Wassermenge sollte ein Verhältnis zum zugegebenen Zement von 0,3 nicht überschreiten, um Konglomerationen der Zuschläge auszuschließen. Außerdem kann der Zement während des Beschichtungsvorgangs nicht vollständig hydratisieren. Bei der späteren Erhärtung des gefügedichten Leichtbetons kann damit eine Nacherhärtung des für die Umhüllung aufgebrachten Zements erreicht werden, die eine Verbesserung des Verbunds zwischen dem Zuschlag und der Umhüllung und auch zwischen der Umhüllung und der Feinmörtelmatrix des Betons bewirken kann. Mit dem erfindungsgemäßen Verfahren konnte bei Verwendung von Zement, eines gewöhnlichen handelsüblichem Stabilisierers und von Wasser eine Beschichtung erreicht werden, die gegenüber dem unbeschichteten Leichtzuschlagkorn bei einer einminütigen Druckbeaufschlagung von 50 bar statt 37,1 Gewichts-% Wasser nur noch 5,3 Gewichts-% Wasser aufnimmt. Die Festigkeit des aus diesem umhüllten Leichtzuschlag hergestellten Betons erreicht im Alter von 28 Tagen eine Steigerung um mehr als 30% gegenüber der Festigkeit des Leichtbetons aus unbehandeltem Leichtzuschlag. Weitere Verbesserungen sind bei einer Optimierung der Umhüllung zu erwarten.

Ziel ist hier die Umhüllung von Zuschlag aus dichtem und porigem Gefüge, um die Verarbeitbarkeit des Frischbetons und/oder die Eigenschaften des erhärteten Betons bei Verwendung von umhüllten Zuschlägen deutlich zu verbessern. Der Umhüllung kommt im wesentlichen eine feuchtesperrende Wirkung und/oder eine Verbesserung des Verbundverhaltens zu, wobei die Umhüllung aus einer gleichmäßig dichten Schicht aufzubauen ist, wobei eine minimale Schichtdicke im Sinne einer Kostenreduzierung und einer Verringerung der Rohdichte im Falle von Leichtzuschlägen anzustreben ist.

Folgende Betonzuschläge können mit der erfindungsgemäßen Umhüllung versehen werden und erreichen dabei Verbesserungen der Frisch- und Festbetoneigenschaften, die ebenfalls beispielhaft angeführt werden:

Zuschläge mit dichtem Gefüge:
Die Umhüllung von Zuschlägen mit dichtem Gefüge kann zu einer deutlichen Erhöhung der Betonfestigkeiten führen und beeinflußt damit das Bruchverhalten des Betons.
Kornformen: kugelig und kantig, gebrochen
Zuschlagarten: Quarzit, dichte und sonstige Kalksteine, quarzitischer und sonstiger Sandstein, Basalt, Porphyr, Granit, Hochofenschlacke etc..

Durch die das Korn umschließende Umhüllung können für Konstruktionsbetone alle Arten von Zuschlägen mit ausreichender Festigkeit eingesetzt werden, die aufgrund ihres Saugvermögens ansonsten nur selten in Konstruktionsbetonen Verwendung finden.

Zuschläge mit porigem Gefüge sind z.B. Leichtzuschläge und Abbruchmaterialien.
Mit der Umhüllung von Leichtzuschlägen werden die bisherigen Probleme der Verarbeitbarkeit und Pumpfähigkeit von Konstruktionsleichtbetonen gelöst. Zudem kann durch die gezielte Einhaltung des Wasserzementwertes und der Frischbetonkonsistenz auch ein günstiges Verhalten des Festbetons erreicht werden.
Kornformen: kugelig und kantig, gebrochen
Zuschlagarten: Blähton, Naturbims, gebrochene Lavaschlacke, Kesselschlacke, Sinterbims, Blähschiefer, Blähglas etc..

Mit der Umhüllung von Abbruchmaterialien können künftig Zuschläge nicht nur aus dem Abbruch von Betonbauwerken, sondern auch aus dem Bauschutt des Abrisses von normalen Hochbauten gewonnen werden. Hier fallen eine Vielfalt unterschiedlichster mineralischer Baustoffe des Mauerwerksbau sowie aus Decken, Böden und Dächern an.
Kornformen: kantig, gebrochen
Materialarten: Betonabbruch (Normalzuschlag mit Mörtelmatrix), Ziegelsplitt, Mauermörtel, Putze, Estriche, baukeramische Stoffe wie Steingutfliesen/feinkeramische Fliesen, Steinzeugwaren, Dachziegel, Mauersteine aus Kalksandstein, Ziegel, Porenbeton, Bimsbeton, Blähtonbeton etc..

Weitere Ausgangsstoffe können für eine Optimierung der erfindungsgemäßen Umhüllung Verwendung finden.

Für die Optimierung der Eigenschaften der erfindungsgemäßen Umhüllung (abdichtende Wirkung selbst bei großen Pumpdrücken, gute Verbundwirkung zwischen Korn und Umhüllung, hohes Nacherhärtungspotential, Lagerfähigkeit, Verschleißeigenschaft, Brandverhalten, Leitfähigkeit etc.) können neben den handelsüblichen Zementen und Spezialbindemitteln auch verschiedenste Betonzusatzmittel und/oder Betonzusatzstoffe sowie sonstige Betonhilfsstoffe verwendet werden. Dabei können verschiedenste Kombinationen von Ausgangsstoffen, die je nach der Art der angestrebten Verbesserung des Betons durch den umhüllten Zuschlag auszuwählen sind, eingesetzt werden:
Zemente: Alle bauüblichen Zemente und alle Spezialbindemittel.

Betonzusatzmittel: Betonverflüssiger (BV);Fließmittel (BV), Luftporenbildner (LP), Dichtungsmittel (DM), Beschleuniger (BE), Stabilisierer (ST) etc..

Betonzusatzstoffe: Inerte Stoffe (Quarz- und Kalksteinmehle), Farbpigmente, Puzzolane (Traß, Steinkohleflugasche, Silicastaub, silicatische Feinstäube, getempertes Gesteinsmehl, Flugaschen), latent-hydraulische Stoffe (Hüttensand), wärmeleitende und elektrisch leitende Stoffe etc..
sonstige Hilfsstoffe: Kunststoffdispersionen,
Hochleistungspolymere, Cellulose, Fasern etc.

Grundsätzlich sind zur Umhüllung von Zuschlägen die Verfahren der Aufbauagglomeration und das Granulierwirbelbett-Verfahren geeignet, um eine möglichst dünne Beschichtung auf der Kornoberfläche aufzubauen, die aufgrund der gleichmäßigen und kompakten Anlagerung der feindispersen Stoffe eine hohe Dichtigkeit erreicht. Die Aufbaugranulation bietet dabei verschiedene Möglichkeiten die erfindungsgemäße Umhüllung auf der Kornoberfläche aufzubauen. So kann neben dem Granulierteller und der Granuliertrommel auch ein sogenannter Granulierkonus zum Einsatz kommen. Neben einstufigen Verfahren handelt es sich beim Granulierkonus um mehrstufige kontinuierlich oder schrittweise abgestufte Tellerbereiche, so daß verschiedenartige Schichten auf der Kornoberfläche aufgebaut werden können, wobei die einzelnen Schichten aus unterschiedlichen Materialien zusammengesetzt sein können. Im Granulierteller bzw. in der Granuliertrommel können auch Prallbleche etc. eingebaut werden, um die Gleichmäßigkeit der Beschichtung und die Packungsdichte der in der Umhüllung befindlichen Stoffe zu optimieren. Neben den üblichen rotationssymetrischen Wänden könnten auch polygonale Teller- und Trommelwände eingesetzt werden. Desweiteren kann durch eine Drucklufteinleitung die Rollbewegung und damit der Schichtenaufbau des umhüllten Zuschlags beeinflußt werden. Die Aufbauagglomeration im Granulierteller, in der Granuliertrommel und im Granulierkonus als auch das Granulierwirbelbett-Verfahren läßt sich sowohl chargenweise als auch kontinuierlich betreiben.

Preßagglomerations-Verfahren, wie sie beispielsweise in der pharmazeutischen Industrie zur Herstellung von Tabletten bekannt sind, könnten bei einer Fortentwicklung des Verfahrens und bei einer sorgfältigen und engen Klassierung der Korngrößen des zu umhüllenden Zuschlags ebenfalls Verwendung finden. Hier sind die Oberflächen der Doppelzylinderpreßwalzen entsprechend den Korngrößen des umhüllten Zuschlags strukturiert. Die Umhüllung wird folglich auf die Kornoberfläche des Zuschlags aufgepreßt. Theoretisch wäre auch die Microverkapselung eine technische Möglichkeit, Zuschläge an der Oberfläche mit einer Beschichtung zu versehen. Hier werden elektrostatische Aufladungen genutzt, um auf die Zuschlagoberfläche die feindispergierten Partikel der Umhüllung sowie Wasser als Bindeflüssigkeit aufzubringen. Die Mischagglomeration in Form eines gewöhnlichen Freifallmischers scheidet weitestgehend aus. Lediglich wenn die Ausgangsstoffe in weitestgehend trockener Form im Mischer vorliegen und mittels Prallblechen und weiteren Einbauten im Mischgefäß eine Verdichtung der feindispersen Stoffe auf der Kornoberfläche erfolgen kann, könnte u.U. eine brauchbare Umhüllung auf den Zuschlag aufgebracht werden. Trogmischer, Schneckenmischer etc. bieten möglicherweise ebenfalls Ansatzpunkte, um bei einer Fortentwicklung der Verfahrensweise in großen Mengen umhüllte Zuschläge mit den erfindungsgemäßen Eigenschaften herzustellen.

Die Umhüllung der Zuschläge kann mit den vorstehend angeführten Verfahrenstechniken entweder zentral beim Hersteller der Zuschläge selbst, also im Kieswerk im Nachgang an die Klassierung, im Brechwerk oder nach dem Brennvorgang im Anschluß an die Abkühlung des Rohzuschlags erfolgen. Dabei kann der Zuschlag direkt aus der Produktionslinie oder von der Halde aufgegriffen werden.

Eine weitere Möglichkeit besteht in der dezentralen Umhüllung der Zuschläge unmittelbar vor der eigentlichen Betonherstellung, beispielsweise im Transportbetonwerk oder auf der Baustelle. Um die abdichtende Wirkung und eine ausreichende Festigkeit in der umhüllten Schicht möglichst frühzeitig zu erreichen, so daß eine Zwischenlagerung des umhüllten Zuschlags nicht erforderlich ist, können neben schnell erhärtenden Zementen oder Spezialbindemitteln auch Betonzusatzmittel in Form von Erstarrungsbeschleunigern zugesetzt werden.

Im Hinblick auf die Effizienz des erfindungsgemäßen Verfahrens sei noch angemerkt, daß beim derzeitigen Stand der Technik mit Hilfe der Aufbauagglomeration im Granulierteller oder in einer Granuliertrommel eine Umhüllung mit einer einheitlichen Schichtdicke, mit einer gleichmäßig auf der gesamten Oberfläche lückenlos dicht aufgetragenen Umhüllung und mit einer verglichen mit dem Durchmesser des Zuschlags geringen Schichtdicke am besten möglich ist. Die dünnschichtige Umhüllung bewirkt insbesondere bei Leichtzuschlägen eine nur geringfügige Erhöhung der Rohdichte von Leichtzuschlägen. Dennoch reicht die Schichtdicke aus, durch die absperrende Wirkung der Umhüllung einem Entzug von großen Teilen des Anmachwassers selbst bei hohen Drücken entgegenzutreten. Die Aufbauagglomeration in einem Granulierteller oder in einer Granuliertrommel erlaubt gerade bei runden Zuschlägen eine besonders kompakte und damit abdichtende Schicht auf der Kornoberfläche aufzubauen. Auch bei gebrochenen Zuschlägen läßt sich die abdichtende Wirkung der zementgebundenen Umhüllung mit der Aufbauagglomeration im Granulierteller bzw. in der Granuliertrommel erreichen. Zu berücksichtigen ist lediglich, daß aufgrund der gebrochenen, kantigen Kornform des Abbruchmaterials eine ungleichmäßigere Schicht als bei der Umhüllung von kugelförmigen Zuschlägen aufgebaut wird. Verbesserungen lassen sich hier mit dem aufwendigeren aber handhabbaren Granulierwirbelbett-Verfahren erreichen, bei dem selbst kantige Zuschläge mit einer äußerst dünnen Schicht umhüllt werden können.

## Patentansprüche

1. Verfahren zur Verarbeitung eines Betons, der einen offenporigen Leichtzuschlagstoff enthält, auf welchen eine Umhüllung aus Zementen mit eingestelltem Wasserzementwert in einem Granulierteller beziehungsweise einer Granuliertrommel durch Agglomeration vorgesehen wird,
**dadurch gekennzeichnet, dass**
bei der Verarbeitung eine Druckbeaufschlagung mit Pumpdrücken erfolgt.

2. Verfahren zur Verarbeitung eines Betons nach dem vorhergehenden Anspruch, worin die Zementumhüllung einen Wasserzementwert mit einem Verhältnis von 0,3 nicht überschreitet.

3. Verfahren nach einem der vorhergehenden Ansprüche, worin der Pumpdruck bis 50 bar beträgt.

4. Verwendung eines umhüllten, offenporigen Leichtzuschlagstoffes mit ausreichender Kornfestigkeit, auf welchen eine dichte Umhüllung aus Zementen, Betonzusatzmitteln und/oder Betonzusatzstoffen nach Vornässung der Zuschlagstoffe und bei gleichzeitigem Aufsprühen von Wasser mit Zement aufagglomeriert wird, zur Herstellung eines pumpfähigen gefügedichten Konstruktionsleichtbetons.

## Claims

1. Method for processing a concrete containing an open-cell lightweight aggregate on which a coating made of cements having an adjusted water-cement ratio is provided in a disk pelletizer or pelletizing drum by agglomeration, **characterized in that** during processing pressure is applied by pump pressures.

2. Method for processing a concrete according to the preceding claim, wherein the cement coating has a water-cement ratio which does not exceed a value of 0.3.

3. Method according to one of the preceding claims, wherein the pump pressure is up to 50 bar.

4. Use of a coated, open-cell lightweight aggregate having adequate particle strength onto which a dense coating of cements, concrete additives and/or concrete aggregates after prewetting of the aggregates and while simultaneously spraying water on is agglomerated to produce a pumpable densely grained lightweight structural concrete.

## Revendications

1. Procédé pour le traitement d'un béton contenant un agrégat léger à pores ouverts sur lequel un enrobage de ciments est prévu par agglomération avec un rapport eau/ciment défini en assiette de granulation ou en tambour de granulation, **caractérisé en ce que** lors du traitement, une pressurisation est réalisée par des pressions de pompe.

2. Procédé pour le traitement d'un béton selon la revendication précédente, dans lequel l'enrobage de ciment de dépasse pas un rapport eau/ciment de 0,3.

3. Procédé selon l'une des revendications précédentes, dans lequel la pression de la pompe atteint jusqu'à 50 bars.

4. Utilisation d'un agrégat léger enrobé et à pores ouverts avec une résistance de grain suffisante, sur lequel un enrobage étanche, composé de ciments, de moyens adjuvants de béton et/ou de matériaux adjuvants de béton, est aggloméré après pré-humidification des adjuvants et par pulvérisation simultanée d'eau avec du ciment pour la fabrication d'un béton léger de construction pouvant être pompé et de structure dense.
